# FASCICULE DE BREVET EUROPEEN

(11) **EP 1 846 997 B1**
(45) Date de publication et mention de la délivrance du brevet: **20.07.2011**
(21) Numéro de dépôt: 06709191.8
(22) Date de dépôt: 27.01.2006
(51) Int. Cl.: H02G 1/12

(54) **OUTIL DE DENUDAGE POUR ELEMENT TUBULAIRE**
ABMANTELUNGSWERKZEUG FÜR EIN RÖHRENFÖRMIGES ELEMENT
STRIPPING TOOL FOR TUBULAR ELEMENT

(30) Priorité: 04.02.2005 FR 0501149
(43) Date de publication de la demande: 24.10.2007
(73) Titulaire: Alroc, 72160 Tuffe (FR)
(72) Inventeur: ROUX, Didier, F-72190 Neuville-Sur-Sarthe (FR)
(74) Mandataire: Laget, Jean-Loup
(86) Numéro de dépôt international: PCT/FR2006/000195
(87) Numéro de publication internationale: WO 2006/082300

(56) Documents cités:
- FR-A- 1 350 818
- FR-A- 2 044 600
- FR-A- 2 729 094
- FR-A- 2 827 536

## Description

La présente invention concerne un outil de dénudage pour élément tubulaire, en particulier câble électrique ou similaire, pour enlever la gaine extérieure ou une autre couche du câble ou tube.

Elle concerne plus particulièrement un outil de dénudage se présentant sous forme d'une pince à prise manuelle, cette pince étant munie d'au moins un organe de coupe circulaire dont le tranchant de la lame de coupe est perpendiculaire à l'axe longitudinal de l'élément à dénuder et/ou d'au moins un organe de coupe longitudinal dont le tranchant de la lame de coupe est parallèle à l'axe longitudinal de l'élément à dénuder, cet organe de coupe longitudinal coopérant avec au moins un organe de guidage du déplacement relatif axial entre câble et organe de coupe.

De telles pinces sont bien connues à ceux versés dans cet art.

Ainsi, le brevet FR-A-1.350.818 décrit une pince comportant deux bras articulés entre eux à leur partie médiane. L'un des bras porte deux galets dont l'un est cylindrique et l'autre en forme de bobine et l'autre bras porte deux couteaux circulaires fixes sur ledit bras. Le câble peut être posé perpendiculairement par rapport à la pince coincée entre les deux couteaux et les deux galets pour une incision circulaire ou bien encore il peut être posé longitudinalement par rapport à la pince pour une incision longitudinale.

Un autre exemple de pince est décrit dans le brevet FR-A-2.044.600. Cette pince porte, sur ses branches, des organes de coupe similaires équipés de lames circulaires montées en bout d'axes, ces axes formant les sommets d'un triangle isocèle en position de fermeture maximale de la pince. L'une des branches ou bras de la pince porte encore un organe de coupe longitudinal comportant une lame tranchante et l'extrémité correspondante de la branche de pince opposée porte des moyens de centrage et d'appui du câble.

Les pinces mentionnées ci-dessus ne permettent pas de faire varier la profondeur de coupe. Or, les câbles utilisés aujourd'hui présentent plusieurs couches de matériaux qui sont le plus souvent d'épaisseurs différentes. L'utilisateur est alors, dans le cas des pinces décrites ci-dessus, obligé d'utiliser différentes pinces de dénudage, chaque pince présentant une profondeur de coupe adaptée à l'épaisseur du matériau à couper. L'utilisateur doit donc préparer à l'avance les outils dont il aura besoin.

Pour résoudre ce problème, il a été proposé des pinces dans lesquelles les lames sont portées par des molettes de fixation sur la pince. La pince est alors fournie avec un jeu de molettes portant des lames pour des coupes de profondeur différente. Un tel outil, s'il offre une gamme de profondeurs de coupe étendue, n'est pas pratique car, au cours d'une utilisation, l'utilisateur est amené à changer les molettes pour obtenir des profondeurs de coupe différentes s'adaptant aux épaisseurs différentes des couches du câble. Les temps de montage et de démontage des molettes pour les remplacer par de nouvelles molettes constituent une perte de temps importante pour l'utilisateur.

Il a également été proposé dans le brevet FR-A-2.827.536, un outil de dénudage d'un câble à enrobage multicouches, du type pince, comprenant à nouveau deux bras liés l'un à l'autre en rotation autour d'un axe central. Ces deux bras définissent entre eux au moins un passage dans lequel est positionné axialement un câble. Au moins une lame de coupe est montée sur l'un des bras de manière à faire saillie dans ledit passage pour couper le câble lors de l'entraînement en rotation de la pince autour du câble positionné perpendiculairement à la pince dans le passage. La pince accueille également longitudinalement le câble pour une incision longitudinale avec la lame de coupe. De manière caractéristique à ce qui est décrit dans ce brevet, la lame de coupe est montée mobile par rapport au bras de la pince qui la porte et est agencée pour pénétrer dans ledit passage à au moins deux profondeurs différentes de manière à permettre au moins deux cotes de profondeur de coupe distinctes.

La réalisation d'une telle pince est complexe. En outre, le support porte-lames est extrêmement encombrant comme l'illustrent les figures de ce brevet. Cet encombrement est notamment lié au fait qu'à une lame de coupe est associée une butée de réglage de profondeur. Il faut donc disposer d'autant de lames de coupe que de butées de réglage de profondeur, ce qui accroît l'encombrement de l'ensemble. En outre, le passage d'une position de coupe à une autre nécessite la présence d'un levier déverrouillable rendant l'ensemble d'utilisation complexe.

Une autre solution, décrite dans ce même brevet, consiste à déplacer la lame de coupe par rapport à une butée de réglage de la profondeur de coupe. Cette solution plus simple ne permet pas toutefois de maîtriser aisément le réglage de profondeur opéré. De ce fait, des coupes avec des cotes de profondeur incorrectes peuvent être réalisées.

Enfin, un dernier exemple de pince appartenant également à l'arrière-plan technologique est décrit dans le brevet FR-A-2.729.094.

Un but de la présente invention est donc de proposer un outil de dénudage du type précité dont la conception permet de couper des couches d'épaisseurs différentes à l'aide d'un organe de coupe de faible encombrement et de conception simple, apte à passer en quelconques secondes d'une position de coupe à une autre sans démontage de pièce.

A cet effet, l'invention a pour objet un outil de dénudage pour élément tubulaire, en particulier câble électrique ou similaire, pour enlever la gaine extérieure ou une autre couche du câble ou tube, cet outil se présentant sous forme d'une pince à prise manuelle, cette pince étant munie d'au moins un organe de coupe circulaire dont le tranchant de la lame de coupe est perpendiculaire à l'axe longitudinal de l'élément à dénuder et/ou d'au moins un organe de coupe longitudinal dont le tranchant de la lame de coupe est parallèle à l'axe longitudinal de l'élément à dénuder, cet organe de coupe longitudinal coopérant avec au moins un organe de guidage du déplacement relatif axial entre câble et organe de coupe, caractérisé en ce qu'au moins l'un des organes de coupe, qui présente plusieurs positions de coupe, comprend, associées à une même lame de coupe, au moins deux butées de réglage de profondeur de coupe, à cote de profondeur de coupe différenciée d'une butée à une autre, lesdites butées coopérant à tour de rôle avec la lame de coupe en fonction de la position de coupe, correspondant à une profondeur de coupe, choisie par l'utilisateur.

Comme les butées de réglage coopèrent désormais avec une même lame de coupe, il en résulte un encombrement réduit de l'ensemble.

Selon une forme de réalisation préférée de l'invention, les butées de réglage de profondeur de coupe sont portées par un barillet, de préférence partiellement encagé, chaque butée présentant une position radiale à l'axe de rotation du barillet fonction de la profondeur de coupe à obtenir.

Le fait de disposer les butées de réglage de profondeur de coupe sur un barillet facilite le passage d'une position de coupe à une autre, ce passage s'effectuant par simple rotation du barillet. Il en résulte une simplicité de l'ensemble.

L'invention a encore pour objet un corps de barillet du type équipé d'au moins deux butées de réglage de profondeur de coupe, à cote de profondeur de coupe différenciée d'une butée à une autre, caractérisé en ce que ledit corps de barillet est agencé pour être monté sur un outil de dénudage du type précité;

L'invention sera bien comprise à la lecture de la description suivante d'exemples de réalisation, en référence aux dessins annexés dans lesquels :

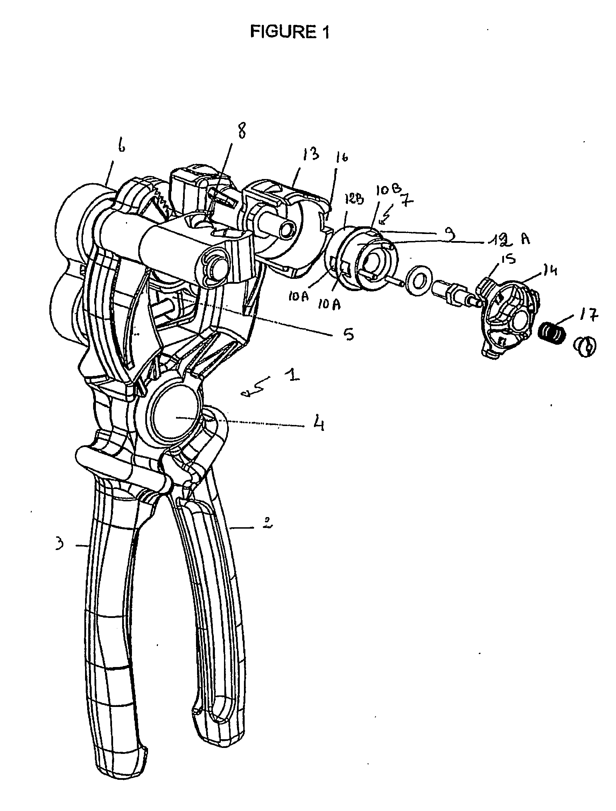

la figure 1 représente une vue en perspective en position partiellement éclatée des éléments le constituant d'un outil de dénudage conforme à l'invention ;
la figure 2 représente une vue en plan de dessus du barillet de l'outil de dénudage;
la figure 3 représente une vue en coupe du barillet représenté à la figure 2 ;
la figure 4 représente, sous forme d'une vue en coupe, un autre mode de réalisation d'un barillet conforme à l'invention ;

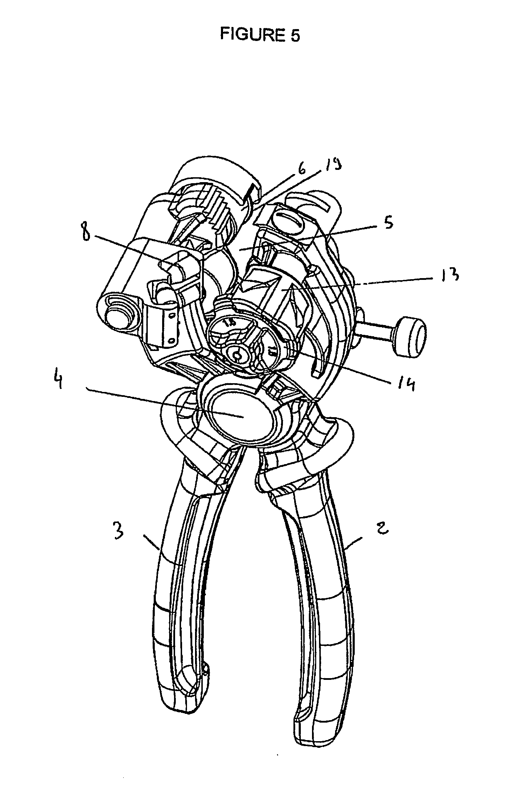

la figure 5 représente une autre vue en perspective d'un outil de dénudage conforme à l'invention et
la figure 6 représente, sous forme d'une vue en coupe, un autre mode de réalisation d'un barillet conforme à l'invention

Comme mentionné ci-dessus, l'outil de dénudage, objet de l'invention, se présente sous la forme d'une pince comprenant deux bras 2, 3 liés l'un à l'autre en rotation autour d'un axe représenté en 4 aux figures. Les deux bras 2, 3 en position fermée de la pince définissent généralement entre eux un passage 5 dans lequel peut être positionné un câble perpendiculairement par rapport à la pince, c'est-à-dire parallèlement à l'axe 4 de la pince en vue d'une découpe circulaire du câble. Dans les exemples représentés, les deux branches de la pince portent chacune au moins un organe 6 de coupe circulaire dont le tranchant de la lame 19 de coupe est perpendiculaire à l'axe longitudinal de l'élément ou câble à dénuder. En effet, trois lames 19 circulaires sont positionnées aux extrémités des branches 2, 3 de la pince. Ces lames de coupe font saillie dans le passage pour couper le câble lors de l'entraînement en rotation de la pince autour dudit câble. Les axes support de ces trois lames 19 de coupe forment un triangle en position maximale de fermeture de ladite pince. Cette pince porte encore au moins un organe 7 de coupe longitudinal dont le tranchant de la lame 9 de coupe est parallèle à l'axe longitudinal de l'élément à dénuder. Cet organe 7 de coupe longitudinal coopère avec au moins un organe 8 de guidage du déplacement relatif axial entre câble et organe 7 de coupe. Dans les exemples représentés, l'organe 7 de coupe est porté par l'une des branches de la pince, les organes 8 de guidage par la partie en correspondance de l'autre branche de la pince. Ces organes 8 de guidage sont réalisés ici sous forme de rouleaux. Le câble, lorsqu'il coopère avec l'organe 7 de coupe longitudinal, est positionné parallèlement à la pince, c'est-à-dire orthogonalement à l'axe 4 de rotation des bras de la pince entre eux. Cet organe 7 de coupe longitudinal permet de procéder à une incision longitudinale du câble permettant, après une coupe circulaire, d'enlever la couche du câble à éliminer.

Comme mentionné ci-dessus, l'invention s'applique de manière équivalente à un outil 1 de dénudage équipé uniquement d'un organe 7 de coupe longitudinal, à un outil 1 de dénudage équipé uniquement d'un organe 6 de coupe circulaire ou à un outil 1 de dénudage équipé à la fois d'au moins un organe 6 de coupe circulaire et d'au moins un organe 7 de coupe longitudinal. En outre, la disposition des organes 6, 7 de coupe circulaire ou longitudinale importe peu et peut correspondre d'ores et déjà à chacun des modes de réalisation connus de l'état de la technique.

De manière caractéristique à l'invention, au moins l'un des organes 6, 7 de coupe comprend, associés à une même lame 19, 9 de coupe au moins deux butées 10A, 10B de réglage de profondeur de coupe à cote de profondeur de coupe différenciée d'une butée à une autre. Ces butées, représentées en 10A, 10B aux figures, coopèrent à tour de rôle avec la lame 9, 19 de coupe en fonction de la position de coupe, correspondant à une profondeur de coupe, choisie par l'utilisateur. Dans les exemples représentés, c'est l'organe 7 de coupe longitudinale qui présente une lame 9 de coupe associée à au moins deux butées 10A, 10B de réglage de profondeur de coupe. Toutefois, une réalisation équivalente aurait pu être obtenue en équipant de manière analogue la lame 19 de l'organe 6 de coupe circulaire d'au moins deux butées 10A, 10B de réglage de profondeur.

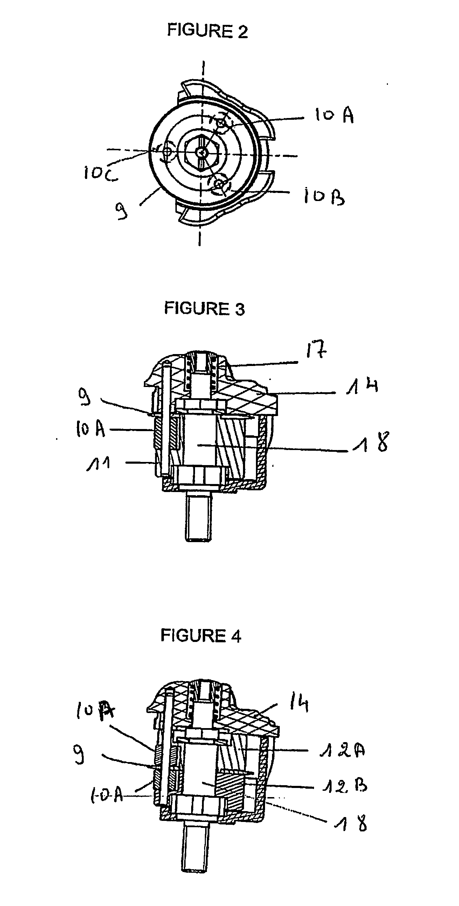

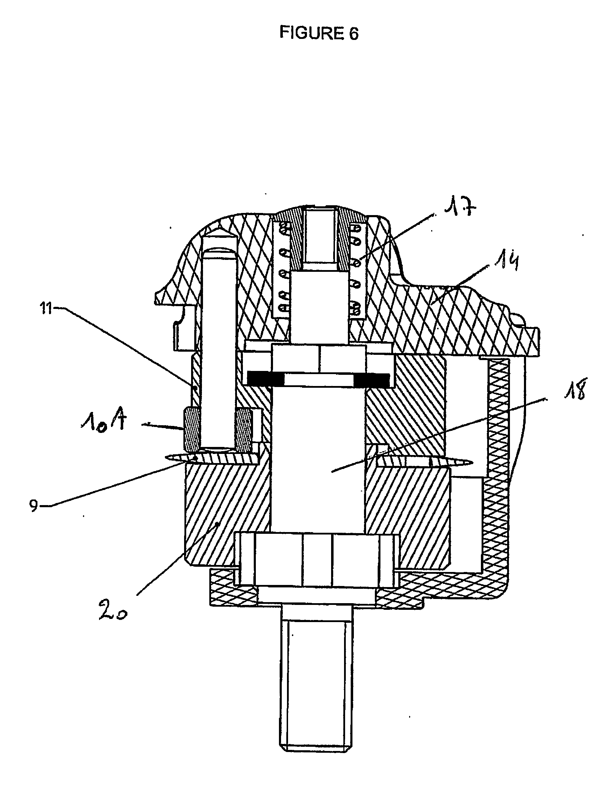

Ces butées 10A, 10B de réglage de profondeur de coupe sont portées par un barillet 11 ; 12A, 12B, de préférence partiellement encagé 13. Chaque butée 10A, 10B présente une position radiale à l'axe 18 de rotation du barillet 11 ; 12A, 12B fonction de la profondeur de coupe à obtenir. Ainsi, les butées 10A, 10B de réglage de la profondeur de coupe peuvent être identiques et positionnées sur des orbites circulaires différentes par rapport à l'axe 18 du barillet 11 ; 12A, 12B. Comme l'illustre la figure 2, ces butées 10A, 10B de réglage de la profondeur de coupe peuvent encore être positionnées sur la même orbite circulaire par rapport à l'axe 18 du barillet mais être de diamètre différent. A chaque fois, un résultat équivalent est obtenu. Ces butées 10A, 10B de réglage de la profondeur de coupe affectent, dans l'exemple représenté, la forme de galet. Ces butées 10A, 10B de réglage de la profondeur peuvent être disposées de part et d'autre de la lame 9, 19 de coupe de l'organe de coupe pour prendre appui sur la matière constitutive de la couche à éliminer, comme l'illustre la figure 4 ou d'un même côté de la lame de coupe comme l'illustrent les figures 3 et 6. La lame 9, 19 de coupe de l'organe 6, 7 de coupe est quant à elle une lame circulaire centrée sur l'axe 18 de rotation du barillet 11 ; 12A, 12B. Ainsi, au cours de l'entraînement en rotation du barillet, cette lame 9, 19 de coupe de l'organe 6, 7 de coupe peut être soit entraînée en rotation de manière solidaire en rotation du corps de barillet (figures 3 et 4), soit être montée folle par rapport au corps de barillet (figure 6) autour de l'axe 18 de rotation du barillet. Dans tous les exemples représentés à l'exception de la figure 6, la lame de coupe 9, 19 est ici montée solidaire en rotation du corps de barillet. Toutefois, la solution de la figure 6 dans laquelle la lame est montée folle à rotation autour de l'axe 18 du barillet est préférée.

De préférence, la lame 9, 19 de coupe de l'organe 7, 6 de coupe est portée par le barillet 11 ; 12A, 12B. Toutefois, la lame de coupe de l'organe de coupe peut également être montée de manière indépendante du barillet tout en restant centrée sur l'axe 18 de rotation du barillet.

Dans l'exemple représenté à la figure 3, il a été retenu une solution dans laquelle le barillet est représenté sous forme d'un corps 11 de type galet monté à rotation autour d'un axe 18 correspondant à l'axe de rotation du barillet. Chacune des butées, au nombre de trois, représentées en 10A à 10C à la figure 2, sont réalisées sous forme de galets fous et montées libres à rotation sur le corps 11 du barillet. Ces butées sont réparties circonférentiellement sur le corps 11 du barillet. La lame de coupe 9 est également centrée sur l'axe 18 de rotation du barillet et est rendue solidaire en rotation du corps 11 de barillet. Dans ce cas, les butées de réglage 10A à 10C de réglage de la profondeur de coupe s'étendent d'un même côté de la lame de coupe. La figure 6 se distingue de la figure 3 par le montage de la lame 9 de coupe montée folle par rapport au corps du barillet autour de l'axe 18 de rotation du barillet, cette lame étant portée par un galet 20.

Dans l'exemple représenté à la figure 4, le corps du barillet est constitué de deux parties, représentées en 12A et 12B aux figures, réalisées sous forme de galets montés à rotation autour de l'axe 18 de rotation du barillet. Des butées, dont un seul jeu représenté en 10A aux figures est visible, sont à nouveau réparties circonférentiellement sur le pourtour des parties 12A et 12B du barillet. Dans ce cas, les butées 10A de réglage de la profondeur sont disposées de part et d'autre de la lame de coupe. Tous ces modes de réalisation constituent bien sûr des modes de réalisation équivalents puisqu'ils associent à chaque fois une même lame de coupe à plusieurs butées de réglage de profondeur.

Le barillet 11 ; 12A, 12B, portant ces butées de réglage de profondeur, présente ainsi autant de positions d'indexation que de profondeurs de coupe. Ce barillet 11 ; 12A, 12B passe d'une position d'indexation à une autre par rotation angulaire. Pour permettre le passage du barillet d'une position d'indexation à une autre, ce barillet 11 ; 12A, 12B est associé à un organe 14 d'entraînement en déplacement commandable manuellement par l'utilisateur de l'outil 1. Cet organe 14 d'entraînement en déplacement du barillet est ici formé d'un flasque rotatif, mobile axialement, et rappelé en position d'appui contre une face d'extrémité du barillet 11 ; 12A, 12B. Ce flasque est muni de dents 15 radiales venant se loger à l'intérieur de crans 16 ménagés sur la cage 13 du barillet dans une position d'indexation de ce dernier. Ainsi, le passage d'une position d'indexation à une autre du barillet est commandée de manière extrêmement aisée. Il suffit d'exercer une traction sur le flasque 14 rappelé par un ressort 17 de compression en appui contre une face d'extrémité du barillet puis de déplacer en rotation ce flasque jusqu'à une position correspondant à la position de coupe choisie par l'utilisateur. A cet effet, des marquages sont apposés sur le flasque pour permettre à l'utilisateur de choisir la profondeur de coupe souhaitée, chaque marquage correspondant à une dimension de profondeur de coupe. Bien que chaque barillet comporte plusieurs butées de réglage de profondeur, il peut être prévu d'associer à chaque outil de dénudage un jeu de barillets qui présentent chacun des butées de profondeur aux réglages différenciés.

Au cours de son entraînement en rotation, le flasque entraîne en rotation le barillet et déplace ainsi les butées de réglage de profondeur jusqu'à amener la butée de réglage de profondeur choisie par l'utilisateur dans la position de coupe, c'est-à-dire en regard de l'ouverture ménagée dans la cage 13 du barillet. L'utilisateur peut alors relâcher le flasque qui est ramené par le ressort 17 dans une position d'appui contre la face d'extrémité du barillet, position dans laquelle il est verrouillé par coopération des dents 15 radiales du flasque avec des crans 16 ménagés sur la cage 13 du barillet. Cette cage 13 est formée par une enveloppe cylindrique entourant partiellement le corps du barillet portant les butées 10A, 10, 10C de réglage de la profondeur de coupe. Le mode opératoire décrit ci-dessus illustre combien il est aisé de passer d'une position de coupe à une autre. Il suffit en effet de déplacer axialement puis en rotation l'organe 14 pour passer d'une position de coupe à une autre sans avoir à démonter une quelconque pièce de la pince. Cette opération s'effectue en quelques secondes malgré le faible encombrement de l'organe de coupe. Un tel barillet pourrait être installé de manière équivalente sur un organe de coupe circulaire.

## Revendications

1. Outil (1) de dénudage pour élément tubulaire, en particulier câble électrique ou similaire, pour enlever la gaine extérieure ou une autre couche du câble ou tube, cet outil (1) se présentant sous forme d'une pince à prise manuelle, cette pince étant munie d'au moins un organe (6) de coupe circulaire dont le tranchant de la lame (19) de coupe est perpendiculaire à l'axe longitudinal de l'élément à dénuder et/ou d'au moins un organe (7) de coupe longitudinal dont le tranchant de la lame (9) de coupe est parallèle à l'axe longitudinal de l'élément à dénuder, cet organe (7) de coupe longitudinal coopérant avec au moins un organe (8) de guidage du déplacement relatif axial entre câble et organe (7) de coupe,
**caractérisé en ce qu'**au moins l'un des organes (6, 7) de coupe, qui présente plusieurs positions de coupe, comprend, associées à une même lame (19, 9) de coupe, au moins deux butées (10A, 10B) de réglage de profondeur de coupe, à cote de profondeur de coupe différenciée d'une butée à une autre, lesdites butées (10A, 10B) coopérant à tour de rôle avec la lame (19, 9) en fonction de la position de coupe, correspondant à une profondeur de coupe, choisie par l'utilisateur.

2. Outil (1) de dénudage selon la revendication 1,
**caractérisé en ce que** les butées (10A, 10B) de réglage de profondeur de coupe sont portées par un barillet (11 ; 12A, 12B), de préférence partiellement encagé (13), chaque butée (10A, 10B) présentant une position radiale à l'axe (18) de rotation du barillet (11 ; 12A, 12B) fonction de la profondeur de coupe à obtenir.

3. Outil (1) de dénudage selon la revendication 2,
**caractérisé en ce que** les butées (10A, 10B) de réglage de la profondeur de coupe sont identiques et sont positionnées sur des orbites circulaires différentes par rapport à l'axe (18) du barillet (11 ; 12A, 12B).

4. Outil (1) de dénudage selon la revendication 2,
**caractérisé en ce que** les butées (10A, 10B) de réglage de la profondeur de coupe sont positionnées sur la même orbite circulaire par rapport à l'axe (18) du barillet et sont de diamètre différent.

5. Outil (1) de dénudage selon l'une des revendications 2 à 4,
**caractérisé en ce que** la lame (9, 19) de coupe de l'organe (7, 6) de coupe est une lame circulaire centrée sur l'axe (18) de rotation du barillet (11 ; 12A, 12B).

6. Outil (1) de dénudage selon la revendication 5,
**caractérisé en ce que** les butées (10A, 10B) de réglage de la profondeur sont disposées de part et d'autre de la lame (9, 19) de coupe de l'organe de coupe pour prendre appui sur la matière constitutive de la couche à éliminer.

7. Outil (1) de dénudage selon la revendication 1,
**caractérisé en ce que** les butées (10A, 10B) de réglage de la profondeur de coupe affectent la forme de galets.

8. Outil (1) de dénudage selon la revendication 2,
**caractérisé en ce que** le barillet (11 ; 12A, 12B) présente autant de positions d'indexation que de profondeurs de coupe.

9. Outil (1) de dénudage selon la revendication 8,
**caractérisé en ce que** le barillet (11 ; 12A, 12B) passe d'une position d'indexation à une autre par rotation angulaire.

10. Outil (1) de dénudage selon la revendication 9,
**caractérisé en ce que** le barillet (11 ; 12A, 12B) est associé à un organe (14) d'entraînement en déplacement commandable manuellement par l'utilisateur de l'outil (1).

11. Outil (1) de dénudage selon la revendication 10,
**caractérisé en ce que** l'organe (14) d'entraînement en déplacement du barillet partiellement en cage (13) est formé d'un flasque rotatif, mobile axialement et rappelé en position d'appui contre une face d'extrémité du barillet (11 ; 12A, 12B), ce flasque étant muni de dents (15) radiales venant se loger à l'intérieur de crans (16) ménagés sur la cage (13) du barillet dans une position d'indexation de ce dernier.

12. Corps de barillet (11 ; 12A, 12B) du type équipé d'au moins deux butées (10A, 10B) de réglage de profondeur de coupe, à cote de profondeur de coupe différenciée d'une butée à une autre,
**caractérisé en ce que** ledit corps de barillet est agencé pour être monté sur un outil de dénudage conforme à l'une des revendications 1 à 11, la lame (19,9) de coupe de l'organe (6,7) de coupe étant centrée sur l'axe (18) de rotation du barillet.

## Claims

1. A stripping tool (1) for a tube element, in particular a power cable or the like, for removing the outer sheath or any other layer of the cable or tube, the tool (1) being handheld pliers, the pliers being fitted with at least one circular cutting member (6), the cutting edge of the cutting blade (19) of which is perpendicular to the longitudinal axis of the element to be stripped and/or with at least one longitudinal cutting member (7) the cutting edge of the cutting blade (9) of which is parallel to the longitudinal axis of the element to be stripped, the longitudinal cutting member (7) cooperating with at least one member (8) for guiding the relative axial displacement between the cable and the cutting member (7),
**characterized in that** at least one of the cutting members (6, 7), which has several cutting positions, comprises, in association with the same cutting blade (19, 9), at least two stops (10A, 10B) for setting the cutting depth, with different cutting depth from stop to stop, said stops (10A, 10B) alternately cooperating with the blade (19, 9) depending on the cutting position which corresponds to a cutting depth chosen by the user.

2. The stripping tool (1) according to claim 1, **characterized in that** the stops (10A, 10B) for setting the cutting depth are carried by a barrel (11; 12A, 12B), preferably partially in a cage (13), each stop (10A, 10B) having a position radial to the rotational axis (18) of the barrel (11; 12A, 12B) depending on the cutting depth to be obtained.

3. The stripping tool (1) according to claim 2, **characterized in that** the stops (10A, 10B) for setting the cutting depth are identical and positioned on circular orbits different with respect to the axis (18) of the barrel (11; 12A, 12B).

4. The stripping tool (1) according to claim 2, **characterized in that** the stops (10A, 10B) for setting the cutting depth are positioned on the same circular orbit with respect to the axis (18) of the barrel and have different diameters.

5. The stripping tool (1) according to any of claims 2 to 4, **characterized in that** the cutting blade (9, 19) of the cutting member (7, 6) is a circular blade centered on the rotational axis (18) of the barrel (11; 12A, 12B).

6. The stripping tool (1) according to claim 5, **characterized in that** the stops (10A, 10B) for setting the depth are arranged on either side of the cutting blade (9, 19) of the cutting member so as to rest on the material composing the layer to be eliminated.

7. The stripping tool (1) according to claim 1, **characterized in that** the stops (10A, 10B) for setting the cutting depth are roller-shaped.

8. The stripping tool (1) according to claim 2, **characterized in that** the barrel (11; 12A, 12B) has as many indexing positions as there are cutting depths.

9. The stripping tool (1) according to claim 8, **characterized in that** the barrel (11; 12A, 12B) goes from one indexing position to another by angular rotation.

10. The stripping tool (1) according to claim 9, **characterized in that** the barrel (11; 12A, 12B) is associated with a displacement drive member (14) manually operable by the user of the tool (1).

11. The stripping tool (1) according to claim 10, **characterized in that** the displacement drive member (14) of the barrel partially inside a cage (13) is formed by a rotating flange, axially movable and returned to the resting position at one end side of the barrel (11; 12A, 12B), the flange being provided with radial teeth (15) to be housed inside notches (16) made on the cage (13) of the barrel in an indexing position of the latter.

12. A barrel body (11; 12A, 12B) of the type fitted with at least two stops (10A, 10B) for setting the cutting depth, with different cutting depth dimensions from stop to stop, **characterized in that** said barrel body is arranged to be mounted on a stripping tool according to any of claims 1 to 11, the cutting blade (19, 9) of the cutting member (6, 7) being centered on the rotational axis (18) of the barrel.

## Patentansprüche

1. Abisolierwerkzeug (1) für ein röhrenförmiges Element, insbesondere ein Stromkabel oder dergleichen, zum Entfernen des Außenmantels oder einer anderen Lage des Kabels oder der Röhre, wobei das Werkzeug (1) in Form einer handgehaltenen Zange vorliegt, wobei diese Zange mit mindestens einem Kreisschneidorgan (6), dessen Schneide des Schneidmessers (19) zur Längsachse des abzuisolierenden Elements rechtwinklig ist, und/oder mit mindestens einem Längsschneidorgan (7), dessen Schneide des Schneidmessers (9) zur Längsachse des abzuisolierenden Elements parallel ist, versehen ist, wobei dieses Längsschneidorgan (7) mit mindestens einem Organ (8) zum Führen der relativen Axialverschiebung zwischen dem Kabel und dem Schneidorgan (7) zusammenwirkt,
**dadurch gekennzeichnet, dass** mindestens eines der Schneidorgane (6, 7), das mehrere Schneidposition aufweist, in Verbindung mit ein und demselben Schneidmesser (19, 9) mindestens zwei Anschläge (10A, 10B) zum Einstellen der Schneidtiefe umfasst, mit von Anschlag zu Anschlag unterschiedlichen Schneidtiefenabmessungen, wobei die Anschläge (10A, 10B) abwechselnd mit dem Messer (19, 9) in Abhängigkeit von der Schneidposition, die einer Schneidtiefe entspricht, die vom Benutzer gewählt wird, zusammenwirken.

2. Abisolierwerkzeug (1) nach Anspruch 1, **dadurch gekennzeichnet, dass** die Anschläge (10A, 10B) zum Einstellen der Schneidtiefe von einer Trommel (11; 12A, 12B) getragen werden, die bevorzugt teilweise in einem Käfig (13) liegt, wobei jeder Anschlag (10A, 10B) eine Position aufweist, die zur Drehachse (18) der Trommel (11; 12A, 12B) in Abhängigkeit von der zu erzielenden Schneidtiefe radial ist.

3. Abisolierwerkzeug (1) nach Anspruch 2, **dadurch gekennzeichnet, dass** die Anschläge (10A, 10B) zum Einstellen der Schneidtiefe identisch sind und auf kreisförmigen Bahnen positioniert sind, die im Verhältnis zur Achse (18) der Trommel (11; 12A, 12B) unterschiedlich sind.

4. Abisolierwerkzeug (1) nach Anspruch 2, **dadurch gekennzeichnet, dass** die Anschläge (10A, 10B) zum Einstellen der Schneidtiefe auf der gleichen kreisförmigen Bahn im Verhältnis zur Achse (18) der Trommel positioniert sind und unterschiedliche Durchmesser aufweisen.

5. Abisolierwerkzeug (1) nach einem der Ansprüche 2 bis 4, **dadurch gekennzeichnet, dass** das Schneidmesser (9, 19) des Schneidorgans (7, 6) ein kreisförmiges Messer ist, das um die Drehachse (18) der Trommel (11; 12A, 12B) herum zentriert ist.

6. Abisolierwerkzeug (1) nach Anspruch 5, **dadurch gekennzeichnet, dass** die Anschläge (10A, 10B) zum Einstellen der Tiefe auf beiden Seiten des Schneidmessers (9, 19) des Schneidorgans angeordnet sind, um sich auf dem Material abzustützen, das die zu beseitigende Lage bildet.

7. Abisolierwerkzeug (1) nach Anspruch 1, **dadurch gekennzeichnet, dass** die Anschläge (10A, 10B) zum Einstellen der Schneidtiefe als Rollen vorliegen.

8. Abisolierwerkzeug (1) nach Anspruch 2, **dadurch gekennzeichnet, dass** die Trommel (11; 12A, 12B) so viele Schaltstellungen aufweist, wie es Schneidtiefen gibt.

9. Abisolierwerkzeug (1) nach Anspruch 8, **dadurch gekennzeichnet, dass** die Trommel (11; 12A, 12B) durch Winkeldrehung von einer Schaltstellung zur anderen übergeht.

10. Abisolierwerkzeug (1) nach Anspruch 9, **dadurch gekennzeichnet, dass** die Trommel (11; 12A, 12B) mit einem Verschiebungsantriebsorgan (14) verknüpft ist, das manuell vom Benutzer des Werkzeugs (1) zu steuern ist.

11. Abisolierwerkzeug (1) nach Anspruch 10, **dadurch gekennzeichnet, dass** das teilweise in einem Käfig (13) liegende Verschiebungsantriebsorgan (14) der Trommel aus einem Drehflansch gebildet ist, der axial beweglich ist und in eine Anlageposition an einer Endseite der Trommel (11; 12A, 12B) zurückgestellt wird, wobei dieser Flansch mit radialen Zähnen (15) versehen ist, die in Einkerbungen (16) zu liegen kommen, die an dem Käfig (13) der Trommel in einer Schaltstellung derselben angebracht sind.

12. Trommelkörper (11; 12A, 12B) von der Art, die mit mindestens zwei Anschlägen (10A, 10B) zum Einstellen der Schneidtiefe ausgestattet ist, mit von Anschlag zu Anschlag unterschiedlichen Schneidtiefenabmessungen, **dadurch gekennzeichnet, dass** der Trommelkörper angeordnet ist, um auf einem Abisolierwerkzeug nach einem der Ansprüche 1 bis 11 montiert zu werden, wobei das Schneidmesser (19, 9) des Schneidorgans (6, 7) auf der Drehachse (18) der Trommel zentriert ist.
